# EUROPEAN PATENT SPECIFICATION

(11) **EP 4 371 319 B1**
(45) Date of publication and mention of the grant of the patent: **04.03.2026**
(21) Application number: 21950308.3
(22) Date of filing: 15.07.2021
(51) Int. Cl.: H04W 4/38, G05B 19/418, G06F 30/20, H04L 67/12, H04Q 9/00, H04W 4/40, H04W 4/70, H04W 28/06, H04L 67/5651

(54) **ACHIEVING UPLINK DATA COMPRESSION USING ESTIMATED ENVIRONMENT MODELS**
ERZIELUNG VON UPLINK-DATENKOMPRESSION UNTER VERWENDUNG VON GESCHÄTZTEN UMGEBUNGSMODELLEN
RÉALISATION D'UNE COMPRESSION DE DONNÉES DE LIAISON MONTANTE À L'AIDE DE MODÈLES D'ENVIRONNEMENT ESTIMÉS

(43) Date of publication of application: 22.05.2024
(73) Proprietor: Telefonaktiebolaget LM Ericsson (publ), 164 83 Stockholm (SE)
(72) Inventor: MUDDUKRISHNA, Ananya, 121 31 Enskededalen (SE); PATEL, Dhruvin, 52070 AACHEN (DE); BLANKENSHIP, Yufei, Kildeer, Illinois 60047 (US); CHERNOGOROV, Fedor, 02720 ESPOO Uusimaa (FI)
(74) Representative: Ericsson
(86) International application number: PCT/SE2021/050731
(87) International publication number: WO 2023/287331

(56) References cited:
- EP-A1- 2 945 457
- WO-A1-2019/180700
- CN-A- 110 505 597
- CN-A- 111 417 178
- US-A1- 2010 131 445
- US-A1- 2017 359 194
- US-A1- 2018 027 309
- US-A1- 2018 091 777
- US-A1- 2021 142 592
- US-A1- 2021 142 592
- US-B1- 10 785 681

## Description

### TECHNICAL FIELD

Embodiments herein relate to a wireless device, a network node and methods therein. Furthermore, a computer program and a computer readable storage medium are also provided herein. In particular, embodiments herein relate to handling sensor data streams in a wireless communications network.

### BACKGROUND

In a typical wireless communications network, wireless devices, also known as wireless communication devices, mobile stations, stations (STA) and/or User Equipments (UE), communicate via a Wide Area Network or a Local Area Network such as a Wi-Fi network or a cellular network comprising a Radio Access Network (RAN) part and a Core Network (CN) part. The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

3GPP is the standardization body for specify the standards for the cellular system evolution, e.g., including 3G, 4G, 5G and the future evolutions, e.g. 6G. Specifications for the Evolved Packet System (EPS), also called a Fourth Generation (4G) network, have been completed within the 3rd Generation Partnership Project (3GPP). As a continued network evolution, the new releases of 3GPP specifies a 5G network also referred to as 5G New Radio (NR).

Frequency bands for 5G NR are being separated into two different frequency ranges, Frequency Range 1 (FR1) and Frequency Range 2 (FR2). FR1 comprises sub-6 GHz frequency bands. Some of these bands are bands traditionally used by legacy standards but have been extended to cover potential new spectrum offerings from 410 MHz to 7125 MHz FR2 comprises frequency bands from 24.25 GHz to 52.6 GHz. Bands in this millimeter wave range have shorter range but higher available bandwidth than bands in the FR1.

Multi-antenna techniques may significantly increase the data rates and reliability of a wireless communication system. For a wireless connection between a single user, such as UE, and a base station, the performance is in particular improved if both the transmitter and the receiver are equipped with multiple antennas, which results in a Multiple-Input Multiple-Output (MIMO) communication channel. This may be referred to as Single-User (SU)-MIMO. In the scenario where MIMO techniques is used for the wireless connection between multiple users and the base station, MIMO enables the users to communicate with the base station simultaneously using the same time-frequency resources by spatially separating the users, which increases further the cell capacity. This may be referred to as Multi-User (MU)-MIMO. Note that MU-MIMO may benefit when each UE only has one antenna. Such systems and/or related techniques are commonly referred to as MIMO.

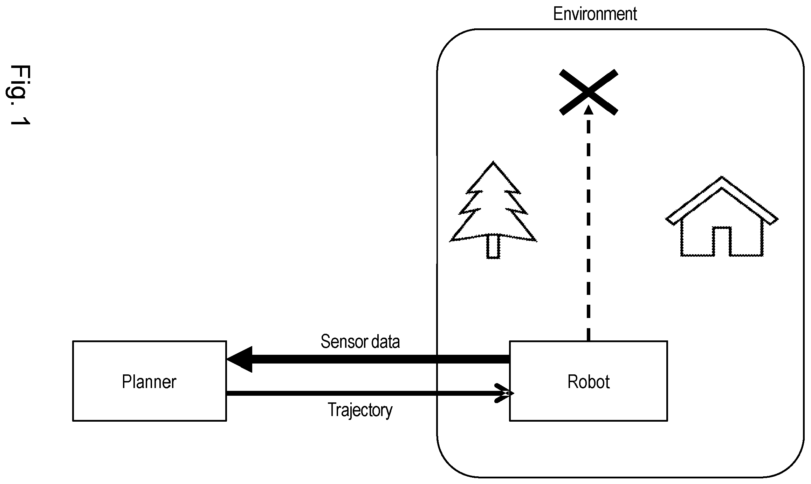

**Transmission of sensor data.** Due to high capacity in wireless communication systems they are sometimes used for transmission of sensor data. This may be exemplified by **Fig. 1****,** where a robot transmits sensor data to a Planner. The sensor data may relate to sensor measuring the robot's surrounding environment, e.g. and may comprise what objects are present, how the robot moves, etc. The planner will then assess the received sensor data, e.g. perform sensor fusion to derive insights, estimate the state of the machine, and plan its further actions, e.g. where and how to move the robot, and then send back trajectory data to the robot.

However, in some cases, the capacity of the network may not be enough to transmit all sensor data. To solve this, a simple alternative is to compress the data, and/or leave out some sensor data, e.g. when there is no significant change compared to the sensor data last sent.

For speech compression, Linear predictive coding (LPC) has been used to compress data, where instead of sending raw speech, estimated speech parameters are transmitted which parameter payload is much lower compared to the raw speech payload.

The use of autoencoders have also been applied to compress data over networks. This approach encodes raw data into small feature vectors that are transmitted over the network. On the receiver, the feature vectors are then decoded back into raw data. The documents US 2021/142592 A1 and WO 2019/180700 A1 describe related systems of the prior art.

As a part of developing embodiments herein a problem was first identified and will be discussed herein.

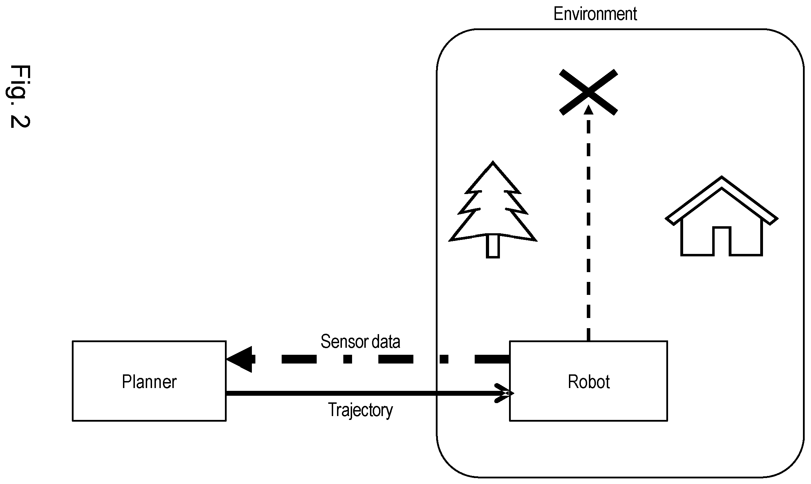

A 5G System (5GS) commonly allocates transmission of data in time slots in a Time-Division Duplexing (TDD) frame asymmetrically for Downlink (DL) and Uplink (UL) transmission. DL transmission typically has a higher number of time slots than UL transmission. The asymmetry is guided by an observation related to 4G systems and LTE, in that human-centric UEs download much more data than upload. However, in machine-centric networking that 5GS is aimed for, more data is uploaded than downloaded. When uplink time slots are fewer than the downlink counterparts, then networking performance is degraded for remote-controlled machines. This may be illustrated by **Fig. 2****,** wherein a robot, in contrast to Fig. 1, only has part of the time slots available to upload sensor data to the planner.

This problem would be very prominent whenever a wireless device needs to send a lot of data over a 5G system, e.g., when a digital twin of a factory shop floor is to be realized over the 5G system. A digital twin as used herein means a model of a changing environment or machine that is regularly updated with information representing the current state of the environment or machine so that the prediction power of the model is maintained high. When realizing a digital twin, a lot of sensor data is then required to maintain the fidelity of the digital twin. While a digital twin is mentioned here, this problem arises for all wireless devices with a need to continuously synchronize a large amount of sensor data within a short time period.

Hence, when uploading sensor data in these conditions, it is necessary to significantly reduce the amount of data to be sent. One solution may be to assign more uplink time slots in the 5GS. However, this may not be possible due to several reasons: synchronization complexity, adhering to legacy protocols, interference between various wireless devices and/or base stations.

An object of embodiments herein is to improve the communication of sensor data.

According to an aspect of embodiments herein, the object is achieved by a method performed by a wireless device, for handling a plurality of sensor data streams related to the wireless device in a wireless communications network. The wireless device obtains sensor data related to the plurality of sensor data streams. Based on the obtained sensor data, the wireless device determines prediction data indicative of how to predict current and/or future sensor data of the plurality of sensor data streams. The prediction data comprises:
a subset of sensor data relating to a subset of the plurality of sensor data streams, and at least one prediction parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams.

The wireless device transmits an indication of the determined prediction data to a network node.

According to another aspect of embodiments herein, the object is achieved by a method performed by a network node, for handling a plurality of sensor data streams related to a wireless device in a wireless communications network. The network node receives from the wireless device, an indication of prediction data, wherein the prediction data indicates of how to predict current and/or future sensor data of the plurality of sensor data streams. The prediction data comprises:
a subset of sensor data relating to a subset of the plurality of sensor data streams, and at least one parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams.

Based on the received indication of prediction data, the network node predicts the current and/or future sensor data of the plurality of sensor data streams.

According to another aspect of embodiments herein, the object is achieved by a wireless device configured to handle a plurality of sensor data streams related to the wireless device in a wireless communications network. The wireless device is configured to:
- obtain sensor data related to the plurality of sensor data streams;
- based on the obtained sensor data, determine prediction data indicative of how to predict current and/or future sensor data of the plurality of sensor data streams, wherein the prediction data is adapted to comprise:
   - a subset of sensor data relating to a subset of the plurality of sensor data streams, and
   - at least one prediction parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams; and
- transmit an indication of the determined prediction data to a network node.

According to another aspect of embodiments herein, the object is achieved by a network node configured to handle a plurality of sensor data streams related to a wireless device in a wireless communications network. The network node is further configured to:
- receive from the wireless device, an indication of prediction data, wherein the prediction data is indicative of how to predict the current and/or future sensor data of the plurality of sensor data streams, wherein the prediction data is adapted to comprise:
   - a subset of sensor data relating to a subset of the plurality of sensor data streams, and
   - at least one parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams; and
- based on the received indication of prediction data, predict the current and/or future sensor data of the plurality of data streams.

It is furthermore provided herein a computer program comprising instructions, which, when executed on at least one processor, cause the at least one processor to carry out any of the methods above, as performed by the network node or the wireless device, respectively. It is additionally provided herein a computer-readable storage medium, having stored thereon a computer program comprising instructions which, when executed on at least one processor, cause the at least one processor to carry out the method according to any of the methods above, as performed by the network node or the wireless device, respectively.

Since the wireless device determines the prediction data indicative of how of predict the current and/or future sensor data of the plurality of sensor data streams, it is possible for the wireless device to communicate prediction data for predicting the plurality of sensor data streams which of significantly less size than the data of the plurality of data streams, and hence achieving a more effective way of communicating sensor data of the plurality of sensor data streams. In some embodiments herein, when the future sensor data of the plurality of data streams is predicted, it is further possible to not only know the current data of the sensor data streams, but also predict the data of the sensor data streams in the future. This enables efficient planning of how to operate the wireless device wherein the planning may be performed ahead of time.

### BRIEF DESCRIPTION OF THE DRAWINGS

Examples of embodiments herein are described in more detail with reference to attached drawings in which:
- **Fig. 1**: is a schematic block diagram illustrating prior art.
- **Fig. 2**: is a schematic block diagrams illustrating prior art.
- **Fig. 3**: is a schematic block diagram illustrating embodiments of a wireless communications network.
- **Fig. 4**: is a flowchart depicting an embodiment of a method in a wireless device.
- **Fig. 5**: is a flowchart depicting an embodiment of a method in a network node.
- **Fig. 6**: is a schematic block diagram illustrating embodiments herein.
- **Fig. 7**: is a combined sequence diagram and flowchart illustrating embodiments herein.
- **Fig. 8a-b**: are schematic block diagrams illustrating embodiments of a wireless device.
- **Fig. 9a-b**: are schematic block diagrams illustrating embodiments of a network node.

### DETAILED DESCRIPTION

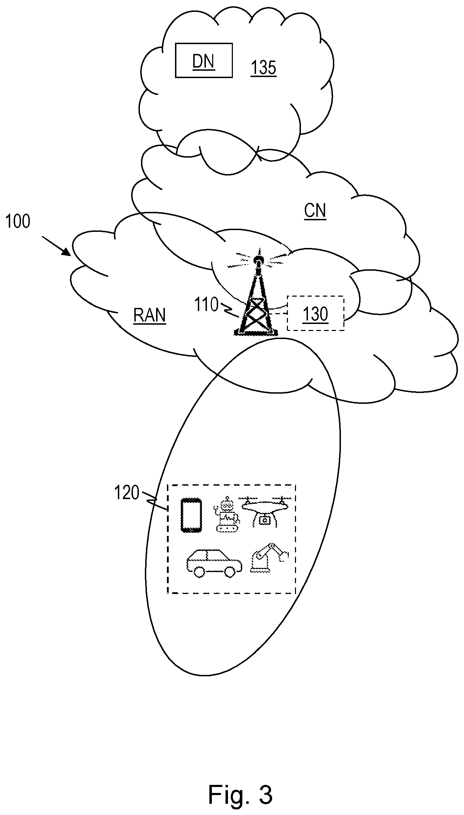

**Fig. 3** is a schematic overview depicting a **wireless communications network 100** wherein embodiments herein may be implemented. The wireless communications network 100 comprises one or more RANs and one or more CNs. The wireless communications network 100 may use a number of different technologies, such as Wi-Fi, Long Term Evolution (LTE), LTE-Advanced, 5G, NR, Wideband Code Division Multiple Access (WCDMA), Global System for Mobile communications/enhanced Data rate for GSM Evolution (GSM/EDGE), Worldwide Interoperability for Microwave Access (WiMAX), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

A number of network nodes operate in the wireless communications network 100 such as e.g. **a network node 110.** The network node 110 may provide radio coverage in a cell, e.g. to **a wireless device 120.** The network node 110 may be any of a NG-RAN node, a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating over radio with the wireless device 120. The network node 110 may be referred to as a serving radio network node and may communicate with the wireless device wireless device 120 with Downlink (DL) transmissions to the wireless device 120 and Uplink (UL) transmissions from the wireless device 120. The network node 110 may further be in communication with a planning node 130. The planning node may in some embodiments be comprised in the network node 130, e.g. operating as a part of the network node 110.

In the wireless communications network 100, one or more wireless devices operate, such as e.g. the wireless device 120. The wireless device 120 may also be referred to as a UE, an internet of things (IoT) device, a mobile station, a non-access point (non-AP) STA, a STA, and/or a wireless terminals. The wireless device 120 communicate via one or more Access Networks (AN), e.g. RAN, to one or more Core Networks (CN). It should be understood by the skilled in the art that "wireless device" or UE, is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station communicating within a cell. The wireless device 120 may comprise a plurality of sensors, e.g. multi-modal sensors, which are associated with a respective sensor data stream, forming a plurality of sensor data streams related to the wireless device 120. In some embodiments the wireless device 120 may be any one or more out of: a remote controlled device, a robot, and an unmanned vehicle.

In the wireless communications network 100, one or more planning nodes may operate, such as e.g. a **planning node 130,** wherein the planning node e.g. is a node in charge of planning the course of action for the wireless device 120, e.g. with better precision than what the wireless device 120 is capable of. The planning node 130 may be configured to receive predicted data indicative of current and/or future sensor data of the plurality of sensor data streams related to the wireless device 120, e.g. the predicted data may comprise sensor data values. The planning node 130 is further configured to use this data to plan actions, e.g. a trajectory related to the wireless device 120, how and when the wireless device 120 is to collect sensor data from the plurality of sensor data streams, how and when the wireless device 120 is to communicate with the network node 110 and/or the planning node 130, in other words, how to operate the wireless device 120. The planning node 130 further is configured to send trajectory data to the wireless device 120.

Methods herein may be performed by the network node 110 and/or the wireless device 120. As an alternative, a Distributed Node (DN) and functionality, e.g. comprised in a **cloud 135** as shown in Fig. 3, may be used for performing or partly performing the methods herein. As a further alternative, a functionality of planning the actions and/or the trajectory of the wireless device 120 may be performed by the network node 110, e.g. instead of the planning node 130, e.g. by the network node 110 comprising the planning node 130.

A number of embodiments will now be described, some of which may be seen as alternatives, while some may be used in combination.

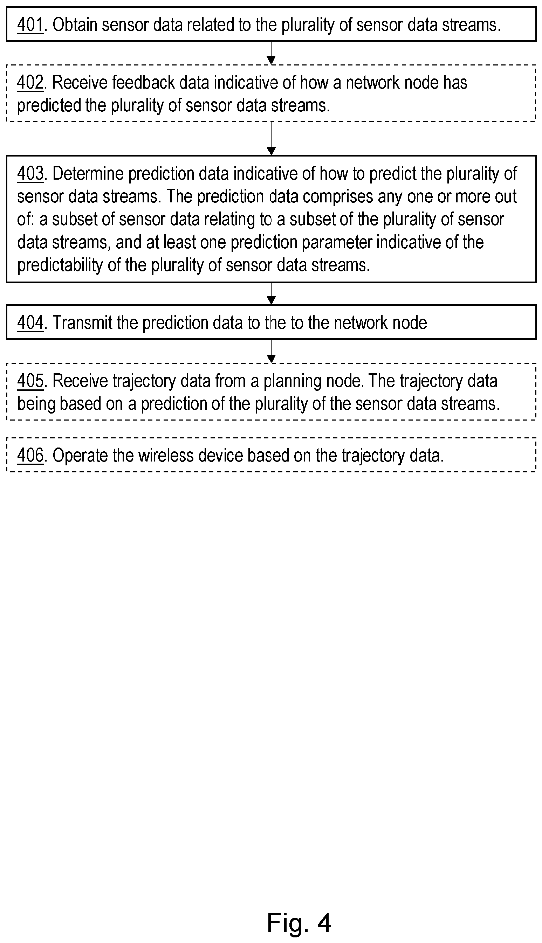

**Fig. 4** shows example embodiments of a method performed by the wireless device 120, for handling a plurality of sensor data streams related to the wireless device 120 in the wireless communications network 100. Sensor data used herein may be represented by any one or more out of: one or more values, one or more measured values, and/or one or more measurements by one or more sensors.

In below embodiments, the wireless device 120 may be controlled, at least partially, by the planning node 130. Furthermore, the wireless device 120 may be represented by any one out of: a remote controlled device, a robot, and an unmanned vehicle.

The method comprises the following actions, which actions may be taken in any suitable order. Optional actions are referred to as dashed boxes in Fig. 4.

**Action 401.** The wireless device 120 obtains sensor data related to the plurality of sensor data streams. The sensor data may be obtained by means of sensors attached to, or part of the wireless device 120, e.g. by measuring using the sensors. A sensor data stream as used herein may be the sensor data collected by a specific sensor over time such as measurement values or registered values. The sensors may be multi-modal sensors and may e.g. measure and/or obtain data related to any one or more out of: force and or position, velocity, acceleration of the wireless device 120, camera images and/or videos of the environment around the wireless device 120, temperature, humidity, and/or atmospheric pressure of the environment around the wireless device 120, range and/or distance to objects in proximity to the wireless device 120.

The sensors may comprise any one or more out of: an Inertial Measurement Unit (IMU), Radio Detection and Ranging (RADAR), and/or Light Detection And Ranging (LIDAR) sensors.

**Action 402.** In some embodiments, the wireless device 120 receives feedback data indicative of how the network node 110 has predicted the current and/or future sensor data of the plurality of sensor data streams. In this way, the wireless device 120 is enabled to more efficiently assist the network node 110 to predict the plurality of sensor data streams.

In some embodiments, the feedback data may comprise, for each sensor data streams in the plurality of sensor data streams, a current predicted value, and one or more future predicted values, e.g. as a series or a function. The feedback data may further comprise, e.g. photos of how the network node 110 perceives the situation of the wireless device 120, e.g. for the wireless device 120 to compare with.

**Action 403.** Based on the obtained sensor data, the wireless device 120 determines prediction data wherein the prediction data is indicative of how to predict the current and/or future sensor data of the plurality of sensor data streams.

The prediction data comprises any one or more out of: a subset of sensor data relating to a subset of the plurality of sensor data streams, and at least one prediction parameter indicative of a predictability of current and/or future sensor data of one or more of the plurality of sensor data streams. For example, the prediction data may be sensor data relating to one sensor data streams, e.g. video data from a camera, out of two sensor data streams, e.g. a positioning sensor data associated with the camera and the video data from the camera. If the video sensor data comprises consistent images over time, e.g. similar with regards to a similarity threshold, the positioning sensor data may accurately be predicted to be the same, e.g. as the camera is not moving.

In other words, a mechanism of reducing the amount of transmitted data when communicating sensor data in embodiments herein is to use a subset of sensor data and at least one prediction parameter. The prediction parameter may be used in combination with the subset of sensor data to predict the current and/or future sensor data of the plurality of sensor data streams. This may either be since the subset of sensor data already comprises information of sensor data not part of the subset of sensor data. This may be since this sensor data can be inferred, or at least predicted with high precision by use of other sensor data. For example, when using low-fidelity video and high-fidelity IMU data it is feasible to predict high-fidelity video and range data through photo-realistic simulation possible with high-performance graphics acceleration hardware.

In some embodiments, the prediction data may comprise only the subset of sensor data related to the plurality of sensor data streams. This may be in scenarios when only this sensor data is needed to predict the plurality of sensor data streams. This may be since the other sensor data streams have not updated significantly, e.g. more than a threshold. It may also be that prediction data previously transmitted to the network node 110 is still valid, e.g. for how long a current and/or future sensor data of the sensor data stream is predictable, and there is thus no need to send a new one.

In some embodiments, the prediction data may comprise only at least one prediction parameter. This may be when the network node 110 already has sensor data for prediction of the plurality of sensor data streams.

In some embodiments, the at least one prediction parameter comprises any one or more out of:
- one or more relations between the sensor data and/or the subset of sensor data, and the plurality of sensor data streams, feedback data, and/or previously transmitted subset of sensor data, e.g. how similar are the sensor data and/or the subset of sensor data to any one of the plurality of sensor data streams, feedback data, and/or previously transmitted subset of sensor data,
- an instruction of how to perform accurate prediction of the current and/or future sensor data of the plurality of sensor data streams based on the subset of sensor data, e.g., this may comprise information of how to do perform a photo-realistic simulation based on the transmitted prediction data,
- a time window for how long the current and/or future sensor data of the plurality of sensor data stream is predictable, e.g., wherein the time window may be for all sensor data streams or for each sensor data stream,
- at least one parameter indicative of a change in predictability of the current and/or future sensor data of the plurality of sensor data streams, e.g., when the predictability of any sensor data stream changes,
- a generating function for replacing sensor data related to one of the sensor data streams of the plurality of sensor data streams, e.g., for generating data, that looks likes it could be from a certain sensor data stream, and
- a correlating function for adjusting sensor data related to one of the sensor data streams of the plurality of sensor data streams e.g., for generating data when only parts of sensor data from a plurality of data streams is available.

In these embodiments, e.g. when the at least one prediction parameter comprise information on how the sensor data and/or the subset of sensor data have a relation with between the plurality of sensor data streams, feedback data, and/or previously transmitted subset of sensor data, it is possible to more efficiently determine which, and how much subset of sensor data is necessary to be sent to the network node 110. For example, if the network node 110 knows that the feedback data and the current sensor data of the wireless device 120 is similar, few or no subset of sensor data is needed to be transmitted to the network node 110 as part of the prediction data.

In some embodiments, the wireless device 120 determines the prediction data based on the feedback data indicative of how the network node 110 has predicted the plurality of sensor data streams. In this way, it is possible for the wireless device 120 to determine whether or not the network node 110 need more prediction data to update the prediction. For example, it may be determined that only data related to some specific plurality of sensor data streams need to be included in the prediction data. Furthermore, it may also be determined that due to some event related to the wireless device 120, the network node 120 need to be updated about the predictability of the current and/or future sensor data, and thus only send the at least one prediction parameter. For example, some sensor data may indicate that the current and/or future sensor data of the sensor data streams are only predictable for 1 second longer, and thus the network node may need new sensor data to use for prediction of the plurality of sensor data streams before that time.

In some embodiments, the prediction data further comprises determining the predictability of the current and/or future sensor data of at least one of the plurality of sensor data streams. In these embodiments, it may thus be possible to adjust which subset of sensor data to send based on the predictability. For example, some sensor data streams are very predictable, e.g. sensor data streams relating to range measurements in a static environment around the wireless device 120, and hence, no data regarding these streams need to be sent to the network node 110 except e.g. rarely and/or for initialization of the prediction. Some sensor data streams may not be very difficult to predict, e.g., video data in a highly dynamic environment or video data when the wireless device 120 is accelerating, and hence, all, or most sensor data relating to that stream may always need to be sent. Some sensor data may be periodic or at least pertain to some pattern, and hence, some sample sensor data may be sent along with a prediction parameter describing the periodicity, pattern or behavior of the sensor data for that sensor data stream.

In some embodiments, the wireless device 120 determines the prediction data based on any one or more out of:
- an Uplink, UL, capacity of the wireless device 120, and
- a signal quality relating to a communication between the network node 110 and the wireless device 120, and
- a distance between the wireless device 120 and the network node 110.

In some of these embodiments, these parameters all relate to some network quality which may reflect how much sensor data may be sent to the network node 110, e.g. with regards to capacity. Hence, in this way, the amount of, or which subset of sensor data to send to the network node 110 may depend on any of the UL capacity, signal quality or distance. For example, when UL capacity is low, less traffic is supported, and hence, minimal sensor data can be sent. Instead it is necessary to rely on describing the sensor data to be predicted using the at least one prediction parameter.

**Action 404.** The wireless device 120 transmits an indication of the prediction data to the network node 110. Transmitting an indication of the prediction data may comprise transmitting the prediction data. In this way, the network node 110 is enabled to predict current and/or future values of the plurality of sensor data streams.

**Action 405.** The wireless device 120 receives trajectory data from the planning node 130. The trajectory data is based on a prediction of the current and/or future sensor data of the plurality of the sensor data streams. The trajectory data may indicate to the wireless device 120 how to operate and may be a result of the planning node planning the actions of the wireless device 120. The planning node 130 may have received the prediction of the current and/or future sensor data of the plurality of the sensor data streams from the network node 110. Due to the prediction, the planning node 130 may achieve a more efficient planning since the prediction of the plurality of data streams may indicate future values of the plurality of data streams, and thus the planning node 130 have more time to compute best trajectory for the wireless device 120, which causes the planning to e.g. be more precise.

**Action 406.** The wireless device 120 operates the wireless device 120, based on the trajectory data. In this way, the wireless device 120 may be more efficiently operated, e.g. as the planning node 130 may have better computational capabilities to determine the best trajectory. Furthermore, as the planning performed by the planning node 130 may be performed with respect to predicted future sensor data stream values, e.g. as received by the network node 110, the wireless device 120 may thus more efficiently operate based on future events, e.g. as received from the network node 110 and/or the planner node 130.

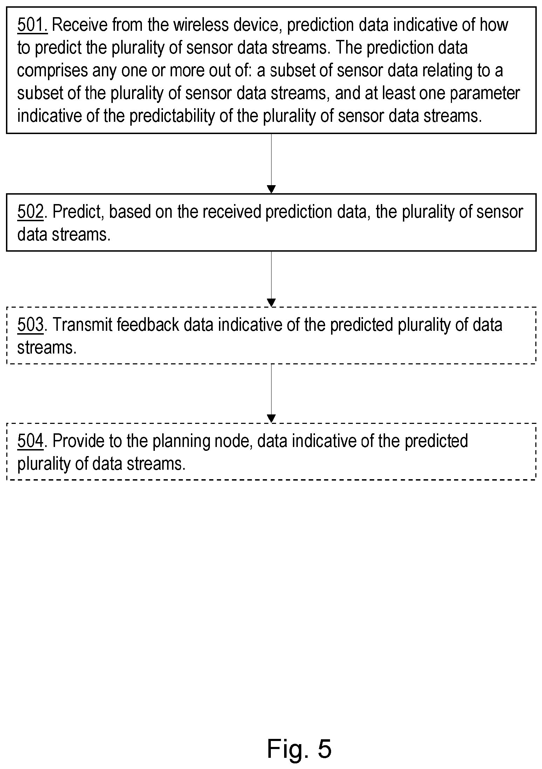

**Fig. 5** shows example embodiments of a method performed by the network node 110, for handling a plurality of sensor data streams related to the wireless device 120 in the wireless communications network 100. In below embodiments, the wireless device 120 may be controlled by the planning node 130. Furthermore the wireless device 120 may be represented by any one or more out of: a remote controlled device, a robot, and an unmanned vehicle. The method comprises the following actions, which actions may be taken in any suitable order. Optional actions are referred to as dashed boxes in Fig. 5.

**Action 501.** The network node 110 receives from the wireless device 120, an indication of prediction data, wherein the prediction data is adapted to indicate how to predict current and/or future sensor data of the plurality of sensor data streams, wherein the prediction data comprises any one or more out of:
- a subset of sensor data relating to a subset of the plurality of sensor data streams, and
- at least one parameter indicative of the predictability of the current and/or future sensor data of the plurality of sensor data streams.

In some embodiments, the at least one prediction parameter comprises any one or more out of:
- a relation between the sensor data and/or the subset of sensor data and the plurality of sensor data streams, feedback data, and/or previously transmitted subset of sensor data,
- an instruction of how to perform accurate prediction of the current and/or future sensor data of the plurality of sensor data streams based on the subset of sensor data,
- a time window for how long the current and/or future sensor data of the plurality of sensor data stream is predictable,
- at least one parameter indicative of a change in predictability of the current and/or future sensor data of the plurality of sensor data streams,
- a generating function for replacing sensor data related to one of the sensor data streams of the plurality of sensor data streams, and
- a correlating function for adjusting sensor data related to one of the sensor data streams of the plurality of sensor data streams.

The prediction data, subset of sensor data, and the at least one prediction parameter may be the prediction data, subset of sensor data, and the at least one prediction parameter, e.g. as explained above with regards to **Action 403.**

**Action 502.** The network node 110 predicts the current and/or future sensor data of the plurality of sensor data streams, based on the received indication of prediction data. Predicting the plurality of sensor data streams may be performed by means of simulating the sensor data streams. Predicting the current and/or future sensor data of the plurality of sensor data streams may involve simulating and/or predicting current and/or future values of the plurality of sensor data streams with respect to past sensor data, e.g. values, of the plurality of sensor data streams. The past sensor data, e.g. values, of the plurality of sensor data streams may in some embodiments not be known, and thus, may be generated by a generator and/or correlation function, e.g. by estimating past sensor data, e.g. values, of the plurality of sensor data streams. In some embodiments, this may involve setting the past values of the plurality of sensor data streams to a preferred value.

**Action 503.** The network node 110 transmits feedback data indicative of the predicted current and/or future sensor data of the plurality of data streams. The feedback data may be a photo-realistic simulation of the current environment of the wireless device 120. The feedback data may comprise data of how the plurality of sensor data streams are predicted by the network node 110. The feedback data may be the feedback data e.g. described in **Action 402.**

**Action 504.** The network node 110 provides to the planning node 130, data indicative of the current and/or future sensor data of the predicted plurality of sensor data streams. In other words, the sensor data streams values predicted by the network node 110 is provided to the planning node 130 such that the planning node can optimally plan which trajectories are best for the wireless device 120, e.g. with respect to knowing future sensor data stream values, e.g. predicted by the network node 110.

Providing the data indicative of the current and/or future sensor data of the predicted plurality of sensor data streams may comprise transmitting the data to the planning node 130. In some other embodiments the planning node 130 is part of, or comprised in the network node 110, and in these scenarios, the data is already available to the planning node 130. In these scenarios, the actions performed by the planning node 130 may be performed by the network node 110.

The above embodiments will now be further explained and exemplified below. The embodiments below may be combined with any suitable embodiment above.

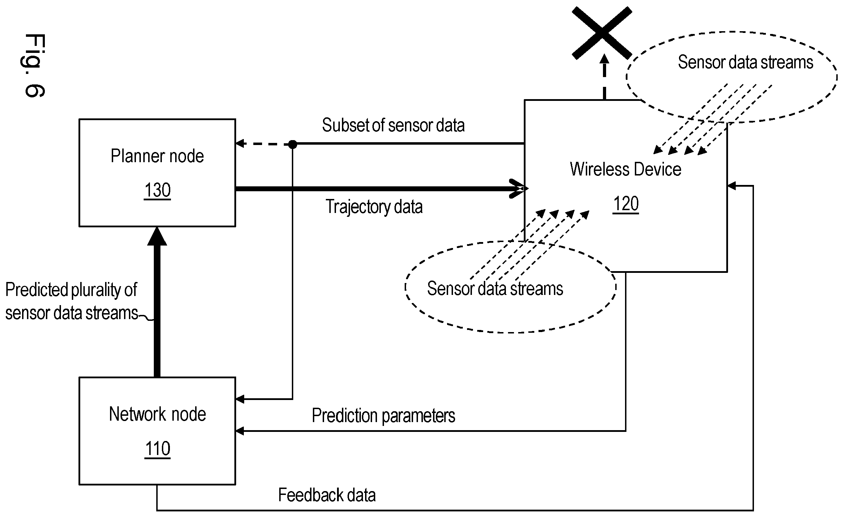

**Example scenario 1.** Embodiments herein relates to uplink data compression method for sensor data streams. Some embodiments herein are illustrated as an example scenario in **Fig. 6****.** The wireless device 120 is associated with a plurality of sensor data streams. The plurality of sensor data streams may be measured by one or more sensors, e.g. for obtaining sensor data.

The sensor data streams may relate to an environment of the wireless device 120 which e.g. comprise of physical parameters that the wireless device 120 is capable of measuring using the sensors. This may additionally or alternatively be related to a trajectory of how the wireless device is operating, e.g. the wireless device may move towards the X illustrated in Fig. 6.

The wireless device 120 determines which subset of sensor data is necessary for the network node 110 to predict the current and/or future sensor data of the plurality of sensor data streams. The subset of sensor data may then be sent to the network node 110. Additionally, the subset of sensor data may also be sent to the planning node 130. In these embodiments the planning node 130 may advantageously operate on a combination of actual and predicted sensor data streams.

Furthermore, the wireless device 120 transmits prediction parameters to the network node 110. The prediction parameters may e.g. describe how the subset of sensor data, and/or e.g. previously transmitted sensor data, may be used to predict the current and future values and/or states of the plurality of sensor data streams.

The network node 110 may send to the wireless device 120, feedback data indicative of how the network node 110 is predicting the plurality of sensor data streams.

This allows the wireless device 120 to determine which sensor data, and which prediction parameters to transmit to the network node 110, e.g. based on how well the network node 110 seem to predict the current and/or future sensor data, e.g. by monitoring the feedback data.

The network node 110 may send the predicted current and/or future sensor data of the plurality of sensor data streams to the planning node. The planning node may then plan a better trajectory for the wireless device 120, this may e.g. be since the planning node 130 may know how the wireless device's 120 environment will likely look like in the future. The planning node 130 may then transmit trajectory data to the wireless device 120.

**Example scenario 2.** In an example scenario (not shown), the wireless device 120 may be represented by a remotely-controlled machine M. Machine M may want to transmit *j* sensor data streams, e.g. the plurality of sensor data streams, for a time window w. This may not be possible, e.g. due to traffic capacity, and e.g., considered an uplink bottleneck.

To resolve the bottleneck, instead of sending the entire stream, e.g. all of the plurality of sensor data streams, the machine M transmits k streams, where k is less than the j streams. E.g. the k streams are a subset of the plurality of sensor data streams and may be related to the subset of sensor data described above with respect to **actions 401-406** and/or **actions 501-504.**

The k streams may be accompanied by instructions and correlations to generate, e.g. predict, the held back j-k streams locally on a remote server, e.g. the network node 110. The instructions and correlations may relate to the at least one prediction parameter described above with respect to **actions 401-406** and/or **actions 501-504.**

The instructions and correlations may be computed on M. This may relate to **action 403** above.

The instructions and correlations may have a much lower payload size than the j-k streams that are held back. The instructions and correlations may be updated by the machine M when needed but infrequently. This achieves a net uplink data compression during the time window w.

The instructions transmitted may be as simple as a hard-coded time-series table. The instructions may additionally or alternatively also comprise more complex parameters such as e.g. parameters for photo-realistic simulation. Photo-realistic simulation is possible today due to introduction of powerful Graphic Processing Units (GPUs) with ray-tracing ability such as e.g., NVIDIA RTX series of GPUs.

The correlations, e.g. the at least one prediction parameter, may relate the k streams that are sent to the j-k streams that are not sent. They can also be correlated to the instructions.

For these scenarios, the environment sensed by the j streams is predictable within the time window w. In particular, industrial environments, such as e.g. data-center corridors and warehouse floors with mostly static scenery and with high-fidelity simulation counterparts are amenable to such predictions.

**Digital twins.** Embodiments herein may improve digital twin compositions. A digital twin as used herein means a model of a changing environment or machine, e.g. wireless device 120, that is regularly updated with information representing the current state of the environment or machine so that the prediction power of the model is maintained high.

A digital twin D may be a strain on uplink resources if it is composed of uplink-intensive digital twins E and sensor streams F. Hence, in embodiments herein, some or all of E and F may be converted into locally generated data sources, e.g. by determining and transmitting indication of prediction data as in **action 403-404** above. The level of compression, e.g. how many streams to transmit, and which instructions, correlations and/or parameters to transmit, may be adaptive to the uplink link capacity. For example, if the wireless device 120 is located close to a cell center, e.g. related to the network node 110, then uplink capacity may be adequate and only light compression, or no compression is necessary, e.g. all or most sensor data streams may be transmitted. If the wireless device 120 is located far from cell center, then uplink capacity may be severely limited, and heavy compression may be applied to reduce load to the uplink. Heavy compression may mean that we only include data related to sensor data streams that are hard to predict. Instead, sensor data easier to predict will rely on instructions, correlations and/or parameters to describe the sensor data to an extent that it is possible to predict, at least to some degree, how the sensor data stream will behave.

**Generator functions and correlation functions.** Generator functions and correlation functions as used herein, e.g. in **action 501 and 403** above, are functions, transmitted from the wireless device 120 as part of the prediction data when it is feasible to reconstruct subsets of the sensor data stream using other subsets of the sensor data stream by exploiting regularity, redundancy, and correlations. Generator functions are typically more complex than correlation functions. The generator functions and correlation functions may be used to reduce the amount of data sent wirelessly, e.g. by replacing part of sensor data by the functionality of generating them according to the respective functions.

**Example scenario 3.** In an example scenario assume that the wireless device 120 is a car characterized by two uplink sensor data streams. The first sensor data stream consists of telemetry data such as status of components from the car's engine, battery, fuel, tyres etc. The second sensor data stream consists of AR data from a passenger in the car wearing an AR headset. The AR sensor data stream consists of video and IMU data. In this scenario, the telemetry sensor data stream may be correlated with the AR sensor data stream. For example, the IMU data in the AR sensor data stream is correlated with the motion and/or pose of the car indicated by the telemetry sensor data stream. If the AR video data shows that the car is in a tight traffic jam, then it is possible to predict that telemetry sensor data is not going to change a lot as long as the AR video scenes remain similar.

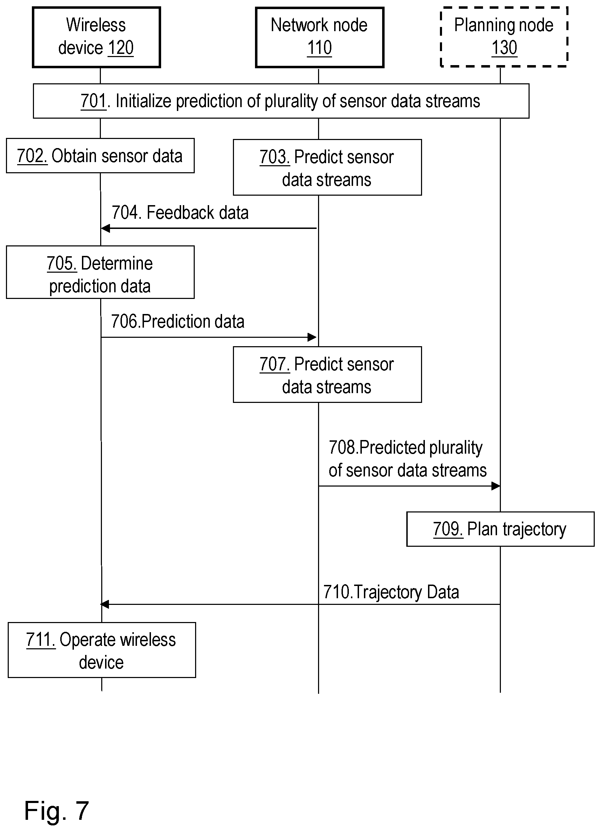

**Example scenario 4.** An example scenario is illustrated in **Fig. 7** which summarize the communication between the network node 110 and the wireless device 120 and the actions performed respectively. Below actions may be taken in any suitable order. While illustrated in Fig. 7 as a separate entity, the planning node 130 may also be a part of the network node 110 and thus, actions performed by the planning node 130 may also be performed by the network node 110.

**Action 701.** The prediction of the current and/or future sensor data of the plurality of sensor data streams may be initialized. This may mean that the wireless device 120 sends some initial prediction data, e.g. initial sensor data, and/or initial at least one prediction parameter, comprising information on how to predict the current and/or future sensor data of the plurality of sensor data streams. The initialization may in some scenarios require that sensor data is transmitted, e.g. so that the prediction at least has some starting point.

**Action 702.** The wireless device 120 obtains sensor data. This may be measured from the plurality of sensor data streams and/or be the plurality of sensor data streams. This action may e.g. relate to **action 401.**

**Action 703.** The network node 110 predicts the current and/or future sensor data of the plurality of sensor data streams, e.g. based on previously received subset of sensor data, e.g. based on the initialization in action 701. This action may e.g. relate to **action 502.**

**Action 704.** The network node 110 may transmit feedback data to the wireless device 120. This may be based on the prediction of action 703. This action may e.g. relate to **actions 402 and 503.**

**Action 705.** The wireless device 120 determines what indication of prediction data to transmit to the network node 110, e.g. which sensor data to transmit, and what prediction parameters are necessary to provide in order for the network node 110 to be able to predict the current and/or future sensor data of the plurality of sensor data streams. This action may e.g. relate to **action 403.**

**Action 706.** The wireless device 120 transmits the indication of prediction data to the network node 110. The wireless device 120 may transmit the indication of prediction data by transmitting sensor data and the at least one prediction parameter separately. The wireless device 120 may transmit the indication of prediction data by transmitting sensor data streams of the subset of sensor data as separate streams. In other words, the wireless device 120 may forward a subset of sensor data streams to the network node 110. This action may e.g. relate to **action 404.**

**Action 707.** The network node 110 predicts the current and/or future sensor data of the plurality of sensor data streams. This may e.g. be a simulation of the sensor data streams not indicated by the received indication of prediction data.

This action may e.g. relate to **action 502.**

**Action 708.** The network node 110 transmits the predicted current and/or future sensor data of the plurality of sensor data streams to the planning node 130. This action may e.g. relate to **action 503.**

**Action 709.** The planning node 130 plans trajectory data for operation of the wireless device 120, e.g. based on the predicted current and/or future sensor data of the plurality of streams provided by the network node 110. This action may e.g. relate to **action 504.**

**Action 710.** The planning node 130 transmits trajectory data to the wireless device 120. This action may e.g. relate to **action 405.**

**Action 711.** The wireless device 120 operates based on the received trajectory data. This action may e.g. relate to **action 406.**

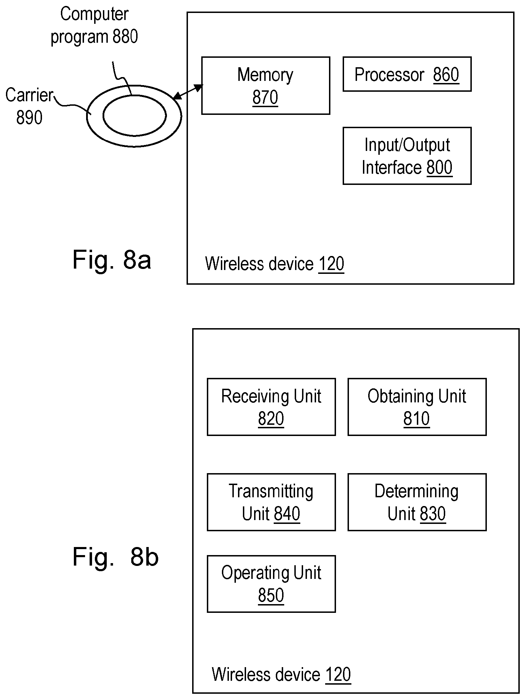

**Wireless device implementation.** To perform the method actions above, the wireless device 120 is configured to handle a plurality of sensor data streams related to the wireless device 120 in the wireless communications network 100. The wireless device 120 may comprise an arrangement depicted in **Figs 8a** and **8b****.**

The wireless device 120 may comprise **an input and output interface 800** configured to communicate with the network node 110 and/or the planning node 130. The input and output interface 800 may comprise a wireless receiver (not shown) and a wireless transmitter (not shown).

The wireless device 120 may further be configured to, e.g. by means of an **obtaining unit 810** in the wireless device 120, obtain sensor data related to the plurality of sensor data streams.

The wireless device 120 may further be configured to, e.g. by means of a **receiving unit 820** in the wireless device 120, receive feedback data indicative of how the network node 110 has predicted current and/or future sensor data of the plurality of sensor data streams.

The wireless device 120 may further be configured to, e.g. by means of the **receiving unit 820** in the wireless device 120, receive trajectory data from the planning node 130, wherein the trajectory data is adapted to be based on a prediction of the current and/or future sensor data of the plurality of the sensor data streams.

The wireless device 120 may further be configured to, e.g. by means of a **determining unit 830** in the wireless device 120, based on the obtained sensor data, determine prediction data indicative of how to predict the current and/or future sensor data of the plurality of sensor data streams, wherein the prediction data is adapted to comprise any one or more out of:
- a subset of sensor data relating to a subset of the plurality of sensor data streams, and
- at least one prediction parameter indicative of the predictability of the current and/or future sensor data of the plurality of sensor data streams.

The wireless device 120 may further be configured to, e.g. by means of the **determining unit 830** in the wireless device 120, determine the prediction data based on the feedback data.

The wireless device 120 may further be configured to, e.g. by means of the **determining unit 830** in the wireless device 120, determine the prediction data by determining the predictability of current and/or future sensor data of at least one of the plurality of sensor data streams.

The wireless device 120 may further be configured to, e.g. by means of the **determining unit 830** in the wireless device 120, determine the prediction data based on any one or more out of:
- an UL capacity of the wireless device 120,
- a signal quality relating to a communication between the network node 110 and the wireless device 120, and
- a distance between the wireless device 120 and the network node 110.

The wireless device 120 may further be configured to, e.g. by means of a **transmitting unit 840** in the wireless device 120, transmit an indication of the determined prediction data to the network node 110.

The wireless device 120 may further be configured to, e.g. by means of an **operating unit 850** in the wireless device 120, based on the trajectory data, operate the wireless device 120.

In some embodiments, the at least one prediction parameter is adapted to comprise any one or more out of:
- a relation between the sensor data and/or the subset of sensor data and the plurality of sensor data streams, feedback data, and/or previously transmitted subset of sensor data,
- an instruction of how to perform accurate prediction of the current and/or future sensor data of the plurality of sensor data streams based on the subset of sensor data,
- a time window for how long the current and/or future sensor data of the plurality of sensor data stream is predictable,
- at least one parameter indicative of a change in predictability of the current and/or future sensor data of the plurality of sensor data streams,
- a generating function for replacing sensor data related to one of the sensor data streams of the plurality of sensor data streams, and
- a correlating function for adjusting sensor data related to one of the sensor data streams of the plurality of sensor data streams.

In some embodiments, the wireless device 120 is arranged to be controlled by a planning node 130. In these embodiments, the wireless device 120 is adapted to be represented by any one or more out of:
- a remote controlled device,
- a robot, and
- an unmanned vehicle.

The embodiments herein may be implemented through a respective processor or one or more processors, such as the **processor 860** of a processing circuitry in the wireless device 120 depicted in Fig. 8a, together with respective computer program code for performing the functions and actions of the embodiments herein. The program code mentioned above may also be provided as a computer program product, for instance in the form of a data carrier carrying computer program code for performing the embodiments herein when being loaded into the wireless device 120. One such carrier may be in the form of a CD ROM disc. It is however feasible with other data carriers such as a memory stick. The computer program code may furthermore be provided as pure program code on a server and downloaded to the wireless device 120.

The wireless device 120 may further comprise a **memory 870** comprising one or more memory units. The memory 870 comprises instructions executable by the processor in wireless device 120. The memory 870 is arranged to be used to store e.g. information, indications, data, configurations, sensor data, sensor data streams, trajectory data, feedback data, and applications to perform the methods herein when being executed in the wireless device 120.

In some embodiments, a **computer program 880** comprises instructions, which when executed by the respective at least one processor 860, cause the at least one processor of the wireless device 120 to perform the actions above.

In some embodiments, a respective **carrier 890** comprises the respective computer program 880, wherein the carrier 890 is one of an electronic signal, an optical signal, an electromagnetic signal, a magnetic signal, an electric signal, a radio signal, a microwave signal, or a computer-readable storage medium.

Those skilled in the art will appreciate that the units in the wireless device 120 described above may refer to a combination of analog and digital circuits, and/or one or more processors configured with software and/or firmware, e.g. stored in the wireless device 120, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

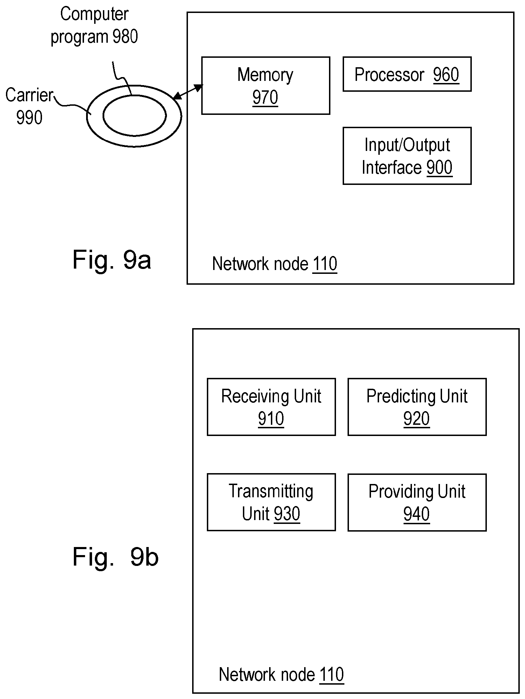

**Network node implementation.** To perform the method actions above, the network node 110 is configured to handle sensor data streams related to the wireless device 120 in the wireless communications network 100. The network node 110 may comprise an arrangement depicted in **Fig. 9a** and **9b****.**

The network node 110 may comprise **an input and output interface 900** configured to communicate with the wireless device 120 and/or the planning node 130. The input and output interface 900 may comprise a wireless receiver (not shown) and a wireless transmitter (not shown).

The network node 110 may further be configured to, e.g. by means of a **receiving unit 910** in the network node 110, receive from the wireless device 120, an indication of prediction data, wherein the prediction data is adapted to indicate of how to predict current and/or future sensor data of the plurality of sensor data streams, wherein the prediction data is adapted to comprise any one or more out of:
- a subset of sensor data relating to a subset of the plurality of sensor data streams, and
- at least one parameter indicative of the predictability of the current and/or future sensor data of the plurality of sensor data streams.

The network node 110 may further be configured to, e.g. by means of a **predicting unit 920** in the network node 110, based on the received prediction data, predict the current and/or future sensor data of the plurality of sensor data streams.

The network node 110 may further be configured to, e.g. by means of a **transmitting unit 930** in the network node 110, transmit feedback data indicative of the predicted current and/or future sensor data of the plurality of sensor data streams.

The network node 110 may further be configured to, e.g. by means of a **providing unit 940** in the network node 110, provide to the planning node 130, data indicative of the predicted current and/or future sensor data of the plurality of sensor data streams.

In some embodiments, the at least one prediction parameter is adapted to comprise any one or more out of:
- a relation between the sensor data and/or the subset of sensor data and the plurality of sensor data streams, feedback data, and/or previously transmitted subset of sensor data,
- an instruction of how to perform accurate prediction of the current and/or future sensor data of the plurality of sensor data streams based on the subset of sensor data,
- a time window for how long the current and/or future sensor data of the plurality of sensor data stream is predictable,
- at least one parameter indicative of a change in predictability of the current and/or future sensor data of the plurality of sensor data streams,
- a generating function for replacing sensor data related to one of the sensor data streams of the plurality of sensor data streams, and
- a correlating function for adjusting sensor data related to one of the sensor data streams of the plurality of sensor data streams.

In some embodiments, the wireless device 120 is arranged to be controlled by the planning node 130. In these embodiments, the wireless device 120 is adapted to be represented by any one or more out of:
- a remote controlled device,
- a robot, and
- an unmanned vehicle.

The embodiments herein may be implemented through a respective processor or one or more processors, such as the **processor 960** of a processing circuitry in the network node 110 depicted in Fig. 9a, together with respective computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 970** comprising one or more memory units. The memory 970 comprises instructions executable by the processor in network node 110. The memory 970 is arranged to be used to store e.g. information, indications, data, configurations, sensor data, sensor data streams, trajectory data, feedback data and applications to perform the methods herein when being executed in the network node 110.

In some embodiments, a **computer program 980** comprises instructions, which when executed by the respective at least one processor 960, cause the at least one processor of the network node 110 to perform the actions above.

In some embodiments, a respective **carrier 990** comprises the respective computer program 980, wherein the carrier 990 is one of an electronic signal, an optical signal, an electromagnetic signal, a magnetic signal, an electric signal, a radio signal, a microwave signal, or a computer-readable storage medium.

Those skilled in the art will appreciate that the units in the network node 110 described above may refer to a combination of analog and digital circuits, and/or one or more processors configured with software and/or firmware, e.g. stored in the network node 110, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments are defined by the appended claims.

## Claims

1. A method performed by a wireless device (120), for handling a plurality of sensor data streams related to the wireless device (120) in a wireless communications network (100), the method comprising:
- *obtaining* (401) sensor data related to the plurality of sensor data streams;
- based on the obtained sensor data, *determining* (403) prediction data indicative of how to predict current and/or future sensor data of the plurality of sensor data streams, wherein the prediction data comprises:
- a subset of sensor data relating to a subset of the plurality of sensor data streams, and
- at least one prediction parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams; and
- *transmitting* (404) an indication of the determined prediction data to a network node (110).

2. The method according to claim 1 further comprising *receiving* (402) feedback data indicative of how the network node (110) has predicted the current and/or future sensor data of the plurality of sensor data streams, and wherein *determining* (403) the prediction data is based on the feedback data.

3. The method according to any of claims 1-2 wherein *determining* (403) the prediction data further comprises determining the predictability of the current and/or future sensor data of at least one of the plurality of sensor data streams.

4. The method according to any of claims 1-3 wherein the at least one prediction parameter comprises any one or more out of:
- a relation between the sensor data and/or the subset of sensor data and the plurality of sensor data streams, feedback data, and/or previously transmitted subset of sensor data,
- an instruction of how to perform accurate prediction of the current and/or future sensor data of the plurality of sensor data streams based on the subset of sensor data,
- a time window for how long the current and/or future sensor data of the plurality of sensor data stream is predictable,
- a change parameter indicative of a change in the predictability of the current and/or future sensor data of the one or more of the plurality of sensor data streams, and
- a correlating function for adjusting sensor data related to one of the sensor data streams of the plurality of sensor data streams.

5. The method according to any claims 1-4 wherein the wireless device (120) is controlled by a planning node (130) and wherein the wireless device (120) is represented by any one out of:
- a remote controlled device,
- a robot, and
- an unmanned vehicle.

6. The method according to claim 5 further comprising:
- *receiving* (405) trajectory data from the planning node (130), wherein the trajectory data is based on a prediction of the current and/or future sensor data of the one or more of the plurality of the sensor data streams, and
- based on the trajectory data, *operating* (406) the wireless device (120).

7. The method according to any of claims 1-6 wherein *determining* (403) the prediction data is based on any one or more out of:
- an uplink, UL, capacity of the wireless device (120),
- a signal quality relating to a communication between the network node (110) and the wireless device (120), and
- a distance between the wireless device (120) and the network node (110).

8. A method performed by a network node (110) for handling a plurality of sensor data streams related to a wireless device (120) in a wireless communications network (100), the method comprising:
- *receiving* (501) from the wireless device (120), an indication of prediction data indicative of how to predict current and/or future sensor data of the plurality of sensor data streams, wherein the prediction data comprises:
- a subset of sensor data relating to a subset of the plurality of sensor data streams, and
- at least one parameter indicative of a predictability of the current and/or future sensor data of one or more of the plurality of sensor data streams, wherein the at least one prediction parameter comprises a generating function for replacing sensor data related to one of the sensor data streams of the plurality of sensor data streams;
- based on the received indication of prediction data, *predicting* (502) the current and/or future sensor data of the plurality of sensor data streams.

9. The method according to claim 8, further comprising *transmitting* (503) feedback data indicative of the current and/or future sensor data of the predicted plurality of sensor data streams.

10. The method according to any of claims 8-9, wherein the at least one prediction parameter comprises any one or more out of:
- a relation between the sensor data and/or the subset of sensor data and the plurality of sensor data streams, feedback data, and/or previously transmitted subset of sensor data,
- an instruction of how to perform accurate prediction of the current and/or future sensor data of the plurality of sensor data streams based on the subset of sensor data,
- a time window for how long the current and/or future sensor data of the plurality of sensor data stream is predictable,
- a change parameter indicative of a change in predictability of the current and/or future sensor data of the one or more of the plurality of sensor data streams, and
- a correlating function for adjusting sensor data related to one of the sensor data streams of the plurality of sensor data streams.

11. The method according to any claims 8-10 wherein the wireless device (120) is controlled by a planning node (130) and wherein the wireless device (120) is represented by any one out of:
- a remote controlled device,
- a robot, and
- an unmanned vehicle.

12. The method according to claim 11 further comprising:
- *providing* (504) to the planning node (130), data indicative of the predicted current and/or future sensor data of the plurality of sensor data streams.

13. A wireless device (120) for handling a plurality of sensor data streams related to the wireless device (120) in a wireless communications network (100), the wireless device (120) is configured to:
- obtain sensor data related to the plurality of sensor data streams;
- based on the obtained sensor data, determine prediction data indicative of how to predict current and/or future sensor data of the plurality of sensor data streams, wherein the prediction data comprises:
- a subset of sensor data relating to a subset of the plurality of sensor data streams, and
- at least one prediction parameter indicative of the predictability of the current and/or future sensor data of one or more of the plurality of sensor data streams, wherein the at least one prediction parameter comprises a generating function for replacing sensor data related to one of the sensor data streams of the plurality of sensor data streams; and
- transmit an indication of the determined prediction data to a network node (110).

14. The wireless device (120) according to claim 13, wherein the wireless device is further configured to:
- receive feedback data indicative of how the network node (110) has predicted the current and/or future sensor data of the plurality of sensor data streams, and
- determine the prediction data based on the feedback data.

15. A network node (110) for handling a plurality of sensor data streams related to a wireless device (120) in a wireless communications network (100), wherein the network node (110) is configured to:
- receive from the wireless device (120), an indication of prediction data, wherein the prediction data is adapted to indicate how to predict current and/or future sensor data of the plurality of sensor data streams, wherein the prediction data comprises:
- a subset of sensor data relating to a subset of the plurality of sensor data streams, and
- at least one parameter indicative of a predictability of the current and/or future sensor data of the plurality of sensor data streams, wherein the at least one prediction parameter comprises a generating function for replacing sensor data related to one of the sensor data streams of the plurality of sensor data streams;
- based on the received indication of prediction data, predict current and/or future sensor data of the the plurality of sensor data streams.

## Patentansprüche

1. Verfahren, das durch eine drahtlose Vorrichtung (120) zum Handhaben einer Vielzahl von Sensordatenströmen durchgeführt wird, die sich auf die drahtlose Vorrichtung (120) in einem drahtlosen Kommunikationsnetzwerk (100) beziehen, wobei das Verfahren umfasst:
- *Erhalten* (401) von Sensordaten, die sich auf die Vielzahl von Sensordatenströmen beziehen;
- basierend auf den erhaltenen Sensordaten, *Bestimmen* (403) von Vorhersagedaten, die anzeigen, wie aktuelle und/oder zukünftige Sensordaten der Vielzahl von Sensordatenströmen vorhergesagt werden sollen, wobei die Vorhersagedaten umfassen:
- eine Teilmenge von Sensordaten, die sich auf eine Teilmenge der Vielzahl von Sensordatenströmen bezieht, und
- mindestens einen Vorhersageparameter, der eine Vorhersagbarkeit der aktuellen und/oder zukünftigen Sensordaten eines oder mehrerer der Vielzahl von Sensordatenströmen anzeigt, wobei der mindestens eine Vorhersageparameter eine Erzeugungsfunktion zum Ersetzen von Sensordaten umfasst, die sich auf einen der Sensordatenströme der Vielzahl von Sensordatenströmen beziehen; und
- *Senden* (404) einer Anzeige der bestimmten Vorhersagedaten an einen Netzwerkknoten (110).

2. Verfahren nach Anspruch 1, ferner umfassend das *Empfangen* (402) von Rückmeldungsdaten, die anzeigen, wie der Netzwerkknoten (110) die aktuellen und/oder zukünftigen Sensordaten der Vielzahl von Sensordatenströmen vorhergesagt hat, und wobei das *Bestimmen* (403) der Vorhersagedaten auf den Rückmeldungsdaten basiert.

3. Verfahren nach einem der Ansprüche 1 bis 2, wobei das *Bestimmen (403)* der Vorhersagedaten ferner das Bestimmen der Vorhersagbarkeit der aktuellen und/oder zukünftigen Sensordaten von mindestens einem der Vielzahl von Sensordatenströmen umfasst.

4. Verfahren nach einem der Ansprüche 1 bis 3, wobei der mindestens eine Vorhersageparameter einen oder mehrere aus folgenden umfasst:
- einer Beziehung zwischen den Sensordaten und/oder der Teilmenge von Sensordaten und der Vielzahl von Sensordatenströmen, Rückmeldungsdaten und/oder der zuvor gesendeten Teilmenge von Sensordaten,
- einer Anweisung, wie eine genaue Vorhersage der aktuellen und/oder zukünftigen Sensordaten der Vielzahl von Sensordatenströmen basierend auf der Teilmenge der Sensordaten durchgeführt werden soll,
- einem Zeitfenster, wie lange die aktuellen und/oder zukünftigen Sensordaten der Vielzahl von Sensordatenströmen vorhersehbar sind,
- einem Änderungsparameter, der eine Änderung der Vorhersagbarkeit der aktuellen und/oder zukünftigen Sensordaten des einen oder der mehreren der Vielzahl von Sensordatenströmen anzeigt, und
- einer Korrelationsfunktion zum Anpassen von Sensordaten, die sich auf einen der Sensordatenströme der Vielzahl von Sensordatenströmen beziehen.

5. Verfahren einem der Ansprüche 1 bis 4, wobei die drahtlose Vorrichtung (120) durch einen Planungsknoten (130) gesteuert wird und wobei die drahtlose Vorrichtung (120) durch eines aus den folgenden dargestellt wird:
- einer ferngesteuerter Vorrichtung,
- einem Roboter und
- einem unbemannten Fahrzeug.

6. Verfahren nach Anspruch 5, ferner umfassend:
- *Empfangen* (405) von Trajektorie-Daten von dem Planungsknoten (130), wobei die Trajektorie-Daten auf einer Vorhersage der aktuellen und/oder zukünftigen Sensordaten eines oder mehrerer der Vielzahl von Sensordatenströmen basieren, und
- basierend auf den Trajektorie-Daten, *Betreiben* (406) der drahtlosen Vorrichtung (120).

7. Verfahren nach einem der Ansprüche 1 bis 6, wobei das *Bestimmen* (403) der Vorhersagedaten auf einem oder mehreren aus den folgenden basiert:
- einer Uplink-Kapazität, UL-Kapazität, der drahtlosen Vorrichtung (120),
- einer Signalqualität, die sich auf eine Kommunikation zwischen dem Netzwerkknoten (110) und der drahtlosen Vorrichtung (120) bezieht, und
- einer Entfernung zwischen der drahtlosen Vorrichtung (120) und dem Netzwerkknoten (110).

8. Verfahren, das von einem Netzwerkknoten (110) zum Handhaben einer Vielzahl von Sensordatenströmen durchgeführt wird, die sich auf eine drahtlose Vorrichtung (120) in einem drahtlosen Kommunikationsnetzwerk (100) beziehen, wobei das Verfahren umfasst:
- *Empfangen* (501) von der drahtlosen Vorrichtung (120) einer Anzeige von Vorhersagedaten, die anzeigen, wie aktuelle und/oder zukünftige Sensordaten der Vielzahl von Sensordatenströmen vorhergesagt werden sollen, wobei die Vorhersagedaten umfassen:
- eine Teilmenge von Sensordaten, die sich auf eine Teilmenge der Vielzahl von Sensordatenströmen bezieht, und
- mindestens einen Parameter, der eine Vorhersagbarkeit der aktuellen und/oder zukünftigen Sensordaten eines oder mehrerer der Vielzahl von Sensordatenströmen anzeigt, wobei der mindestens eine Vorhersageparameter eine Erzeugungsfunktion zum Ersetzen von Sensordaten umfasst, die sich auf einen der Sensordatenströme der Vielzahl von Sensordatenströmen beziehen;
- basierend auf der empfangenen Anzeige von Vorhersagedaten, *Vorhersagen* (502) der aktuellen und/oder zukünftigen Sensordaten der Vielzahl von Sensordatenströmen.

9. Verfahren nach Anspruch 8, ferner umfassend das *Senden* (503) von Rückmeldungsdaten, die die aktuellen und/oder zukünftigen Sensordaten der vorhergesagten Vielzahl von Sensordatenströmen anzeigen.

10. Verfahren nach einem der Ansprüche 8 bis 9, wobei der mindestens eine Vorhersageparameter eines oder mehrere aus folgenden umfasst:
- einer Beziehung zwischen den Sensordaten und/oder der Teilmenge von Sensordaten und der Vielzahl von Sensordatenströmen, Rückmeldungsdaten und/oder der zuvor gesendeten Teilmenge von Sensordaten,
- einer Anweisung, wie eine genaue Vorhersage der aktuellen und/oder zukünftigen Sensordaten der Vielzahl von Sensordatenströmen basierend auf der Teilmenge der Sensordaten durchgeführt werden soll,
- einem Zeitfenster, wie lange die aktuellen und/oder zukünftigen Sensordaten der Vielzahl von Sensordatenströmen vorhersehbar sind,
- einem Änderungsparameter, der eine Änderung der Vorhersagbarkeit der aktuellen und/oder zukünftigen Sensordaten des einen oder der mehreren der Vielzahl von Sensordatenströmen anzeigt, und
- einer Korrelationsfunktion zum Anpassen von Sensordaten, die sich auf einen der Sensordatenströme der Vielzahl von Sensordatenströmen beziehen.

11. Verfahren nach einem der Ansprüche 8 bis 10, wobei die drahtlose Vorrichtung (120) durch einen Planungsknoten (130) gesteuert wird und wobei die drahtlose Vorrichtung (120) durch eines aus den folgenden dargestellt wird:
- einer ferngesteuerter Vorrichtung,
- einem Roboter und
- einem unbemannten Fahrzeug.

12. Verfahren nach Anspruch 11, ferner umfassend:
- *Bereitstellen* (504) an den Planungsknoten (130) von Daten, die die vorhergesagten aktuellen und/oder zukünftigen Sensordaten der Vielzahl von Sensordatenströmen anzeigen.

13. Drahtlose Vorrichtung (120) zum Handhaben einer Vielzahl von Sensordatenströmen, die sich auf die drahtlose Vorrichtung (120) in einem drahtlosen Kommunikationsnetzwerk (100) beziehen, wobei die drahtlose Vorrichtung (120) konfiguriert ist zum:
- Erhalten von Sensordaten, die sich auf die Vielzahl von Sensordatenströmen beziehen;
- basierend auf den erhaltenen Sensordaten, Bestimmen von Vorhersagedaten, die anzeigen, wie aktuelle und/oder zukünftige Sensordaten der Vielzahl von Sensordatenströmen vorhergesagt werden sollen, wobei die Vorhersagedaten umfassen:
- eine Teilmenge von Sensordaten, die sich auf eine Teilmenge der Vielzahl von Sensordatenströmen bezieht, und
- mindestens einen Vorhersageparameter, der die Vorhersagbarkeit der aktuellen und/oder zukünftigen Sensordaten eines oder mehrerer der Vielzahl von Sensordatenströmen anzeigt, wobei der mindestens eine Vorhersageparameter eine Erzeugungsfunktion zum Ersetzen von Sensordaten umfasst, die sich auf einen der Sensordatenströme der Vielzahl von Sensordatenströmen beziehen; und
- Senden einer Anzeige der bestimmten Vorhersagedaten an einen Netzwerkknoten (110).

14. Drahtlose Vorrichtung (120) nach Anspruch 13, wobei die drahtlose Vorrichtung ferner konfiguriert ist zum:
- Empfangen von Rückmeldungsdaten, die anzeigen, wie der Netzwerkknoten (110) die aktuellen und/oder zukünftigen Sensordaten der Vielzahl von Sensordatenströmen vorhergesagt hat, und
- Bestimmen der Vorhersagedaten basierend auf den Rückmeldungsdaten.

15. Netzwerkknoten (110) zum Handhaben einer Vielzahl von Sensordatenströmen, die sich auf eine drahtlose Vorrichtung (120) in einem drahtlosen Kommunikationsnetzwerk (100) beziehen, wobei der Netzwerkknoten (110) konfiguriert ist zum:
- Empfangen einer Anzeige von Vorhersagedaten von der drahtlosen Vorrichtung (120), wobei die Vorhersagedaten angepasst sind, um anzuzeigen, wie aktuelle und/oder zukünftige Sensordaten der Vielzahl von Sensordatenströmen vorhergesagt werden sollen, wobei die Vorhersagedaten umfassen:
- eine Teilmenge von Sensordaten, die sich auf eine Teilmenge der Vielzahl von Sensordatenströmen bezieht, und
- mindestens einen Parameter, der eine Vorhersagbarkeit der aktuellen und/oder zukünftigen Sensordaten der Vielzahl von Sensordatenströmen anzeigt, wobei der mindestens eine Vorhersageparameter eine Erzeugungsfunktion zum Ersetzen von Sensordaten umfasst, die sich auf einen der Sensordatenströme der Vielzahl von Sensordatenströmen beziehen;
- basierend auf der empfangenen Anzeige von Vorhersagedaten, Vorhersagen der aktuellen und/oder zukünftigen Sensordaten der Vielzahl von Sensordatenströmen.

## Revendications

1. Procédé mis en œuvre par un dispositif sans fil (120), destiné à prendre en charge une pluralité de flux de données de capteur apparentés au dispositif sans fil (120) dans un réseau de communications sans fil (100), le procédé comprenant :
- *l'obtention* (401) de données de capteur apparentées à la pluralité de flux de données de capteur ;
- en fonction des données de capteur obtenues, la *détermination* (403) de données de prédiction indiquant comment prédire des données de capteur actuelles et/ou futures de la pluralité de flux de données de capteur, dans lequel les données de prédiction comprennent :
- un sous-ensemble de données de capteur se rapportant à un sous-ensemble de la pluralité de flux de données de capteur, et
- au moins un paramètre de prédiction indiquant une prédictibilité des données de capteur actuelles et/ou futures d'un ou plusieurs parmi la pluralité de flux de données de capteur, dans lequel l'au moins un paramètre de prédiction comprend une fonction de génération permettant de remplacer des données de capteur apparentées à l'un des flux de données de capteur de la pluralité de flux de données de capteur ; et
- la *transmission* (404) d'une indication des données de prédiction déterminées à un nœud de réseau (110).

2. Procédé selon la revendication 1 comprenant en outre la *réception* (402) de données de rétroaction indiquant comment le nœud de réseau (110) a prédit les données de capteur actuelles et/ou futures de la pluralité de flux de données de capteur, et dans lequel la *détermination* (403) des données de prédiction est en fonction des données de rétroaction.

3. Procédé selon l'une quelconque des revendications 1 à 2 dans lequel la *détermination* (403) des données de prédiction comprend en outre la détermination de la prédictibilité des données de capteur actuelles et/ou futures d'au moins l'un parmi la pluralité de flux de données de capteur.

4. Procédé selon l'une quelconque des revendications 1 à 3 dans lequel l'au moins un paramètre de prédiction comprend l'un quelconque ou plusieurs quelconques parmi :
- une relation entre les données de capteur et/ou le sous-ensemble de données de capteur et la pluralité de flux de données de capteur, des données de rétroaction, et/ou un sous-ensemble précédemment transmis de données de capteur,
- une instruction concernant la manière de mettre en œuvre une prédiction précise des données de capteur actuelles et/ou futures de la pluralité de flux de données de capteur en fonction du sous-ensemble de données de capteur,
- une fenêtre temporelle indiquant la durée pendant laquelle les données de capteur actuelles et/ou futures de la pluralité de flux de données de capteur peuvent être prédites,
- un paramètre de changement indiquant un changement dans la prédictibilité des données de capteur actuelles et/ou futures de celui ou de ceux parmi la pluralité de flux de données de capteur, et
- une fonction de corrélation permettant d'ajuster des données de capteur apparentées à l'un des flux de données de capteur de la pluralité de flux de données de capteur.

5. Procédé selon de quelconques revendications 1 à 4 dans lequel le dispositif sans fil (120) est commandé par un nœud de planification (130) et dans lequel le dispositif sans fil (120) est représenté par l'un quelconque parmi :
- un dispositif commandé à distance,
- un robot, et
- un véhicule sans pilote.

6. Procédé selon la revendication 5, comprenant en outre :
- la *réception* (405) de données de trajectoire en provenance du nœud de planification (130), dans lequel les données de trajectoire sont en fonction d'une prédiction des données de capteur actuelles et/ou futures de celui ou de ceux parmi la pluralité des flux de données de capteur, et
- en fonction des données de trajectoire, le *fonctionnement* (406) du dispositif sans fil (120).

7. Procédé selon l'une quelconque des revendications 1 à 6 dans lequel la *détermination* (403) des données de prédiction est en fonction de l'une quelconque ou plusieurs quelconques parmi :
- une capacité de liaison montante, UL, du dispositif sans fil (120),
- une qualité de signal se rapportant à une communication entre le nœud de réseau (110) et le dispositif sans fil (120), et
- une distance entre le dispositif sans fil (120) et le nœud de réseau (110).

8. Procédé mis en œuvre par un nœud de réseau (110), destiné à prendre en charge une pluralité de flux de données de capteur apparentés au dispositif sans fil (120) dans un réseau de communications sans fil (100), le procédé comprenant :
- la *réception* (501) en provenance du dispositif sans fil (120), d'une indication de données de prédiction indiquant comment prédire des données de capteur actuelles et/ou futures de la pluralité de flux de données de capteur, dans lequel les données de prédiction comprennent :
- un sous-ensemble de données de capteur se rapportant à un sous-ensemble de la pluralité de flux de données de capteur, et
- au moins un paramètre indiquant une prédictibilité des données de capteur actuelles et/ou futures d'un ou plusieurs parmi la pluralité de flux de données de capteur, dans lequel l'au moins un paramètre de prédiction comprend une fonction de génération permettant de remplacer des données de capteur apparentées à l'un des flux de données de capteur de la pluralité de flux de données de capteur ;
- en fonction de l'indication reçue de données de prédiction, la *prédiction* (502) des données de capteur actuelles et/ou futures de la pluralité de flux de données de capteur.

9. Procédé selon la revendication 8, comprenant en outre la *transmission* (503) de données de rétroaction indiquant les données de capteur actuelles et/ou futures de la pluralité prédite de flux de données de capteur.

10. Procédé selon l'une quelconque des revendications 8 à 9, dans lequel l'au moins un paramètre de prédiction comprend l'un quelconque ou plusieurs quelconques parmi :
- une relation entre les données de capteur et/ou le sous-ensemble de données de capteur et la pluralité de flux de données de capteur, des données de rétroaction, et/ou un sous-ensemble précédemment transmis de données de capteur,
- une instruction concernant la manière de mettre en oeuvre une prédiction précise des données de capteur actuelles et/ou futures de la pluralité de flux de données de capteur en fonction du sous-ensemble de données de capteur,
- une fenêtre temporelle indiquant la durée pendant laquelle les données de capteur actuelles et/ou futures de la pluralité de flux de données de capteur peuvent être prédites,
- un paramètre de changement indiquant un changement dans la prédictibilité des données de capteur actuelles et/ou futures de celui ou de ceux parmi la pluralité de flux de données de capteur, et
- une fonction de corrélation permettant d'ajuster des données de capteur apparentées à l'un des flux de données de capteur de la pluralité de flux de données de capteur.

11. Procédé selon de quelconques revendications 8 à 10 dans lequel le dispositif sans fil (120) est commandé par un nœud de planification (130) et dans lequel le dispositif sans fil (120) est représenté par l'un quelconque parmi :
- un dispositif commandé à distance,
- un robot, et
- un véhicule sans pilote.

12. Procédé selon la revendication 11, comprenant en outre :
- la *fourniture* (504) au nœud de planification (130), de données indiquant les données de capteur actuelles et/ou futures prédites de la pluralité de flux de données de capteur.

13. Dispositif sans fil (120) destiné à prendre en charge une pluralité de flux de données de capteur apparentés au dispositif sans fil (120) dans un réseau de communications sans fil (100), le dispositif sans fil (120) est configuré pour :
- obtenir des données de capteur apparentées à la pluralité de flux de données de capteur ;
- en fonction des données de capteur obtenues, déterminer des données de prédiction indiquant comment prédire des données de capteur actuelles et/ou futures de la pluralité de flux de données de capteur, dans lequel les données de prédiction comprennent :
- un sous-ensemble de données de capteur se rapportant à un sous-ensemble de la pluralité de flux de données de capteur, et
- au moins un paramètre de prédiction indiquant la prédictibilité des données de capteur actuelles et/ou futures d'un ou plusieurs parmi la pluralité de flux de données de capteur, dans lequel l'au moins un paramètre de prédiction comprend une fonction de génération permettant de remplacer des données de capteur apparentées à l'un des flux de données de capteur de la pluralité de flux de données de capteur ; et
- transmettre une indication des données de prédiction déterminées à un nœud de réseau (110).

14. Dispositif sans fil (120) selon la revendication 13, dans lequel le dispositif sans fil est configuré en outre pour :
- recevoir des données de rétroaction indiquant comment le nœud de réseau (110) a prédit les données de capteur actuelles et/ou futures de la pluralité de flux de données de capteur, et
- déterminer les données de prédiction en fonction des données de rétroaction.

15. Nœud de réseau (110) destiné à prendre en charge une pluralité de flux de données de capteur apparentés à un dispositif sans fil (120) dans un réseau de communications sans fil (100), dans lequel le nœud de réseau (110) est configuré pour :
- recevoir en provenance du dispositif sans fil (120), une indication de données de prédiction, dans lequel les données de prédiction sont conçues pour indiquer comment prédire des données de capteur actuelles et/ou futures de la pluralité de flux de données de capteur, dans lequel les données de prédiction comprennent :
- un sous-ensemble de données de capteur se rapportant à un sous-ensemble de la pluralité de flux de données de capteur, et
- au moins un paramètre indiquant une prédictibilité des données de capteur actuelles et/ou futures de la pluralité de flux de données de capteur, dans lequel l'au moins un paramètre de prédiction comprend une fonction de génération permettant de remplacer des données de capteur apparentées à l'un des flux de données de capteur de la pluralité de flux de données de capteur ;
- en fonction de l'indication reçue de données de prédiction, prédire des données de capteur actuelles et/ou futures de la pluralité de flux de données de capteur.
